# FASCICULE DE BREVET EUROPEEN

(11) **EP 2 082 336 B1**
(45) Date de publication et mention de la délivrance du brevet: **01.09.2010**
(21) Numéro de dépôt: 07858421.6
(22) Date de dépôt: 10.10.2007
(51) Int. Cl.: G06F 17/30, G06K 9/46

(54) **PROCEDE DE RECHERCHE ET DE RECONNAISSANCE RAPIDES D'UNE IMAGE NUMERIQUE REPRESENTATIVE D'AU MOINS UN MOTIF GRAPHIQUE DANS UNE BANQUE D'IMAGES NUMERIQUES**
VERFAHREN FÜR SCHNELLE SUCHE UND ERKENNUNG EINES MINDESTENS EIN GRAPHISCHES MUSTER REPRÄSENTIERENDEN DIGITALEN BILDES IN EINER BANK DIGITALER BILDER
METHOD OF FAST SEARCHING AND RECOGNITION OF A DIGITAL IMAGE REPRESENTATIVE OF AT LEAST ONE GRAPHICAL PATTERN IN A BANK OF DIGITAL IMAGES

(30) Priorité: 11.10.2006 FR 0608904; 21.11.2006 US 860218 P
(43) Date de publication de la demande: 29.07.2009
(73) Titulaire: Spikenet Technology, 31520 Ramonville St Agne (FR)
(72) Inventeur: THORPE, Simon, 31540 St Felix Lauragais (FR); GUILBAUD, Nicolas, 31400 Toulouse (FR)
(74) Mandataire: Cabinet BARRE LAFORGUE & associés
(86) Numéro de dépôt international: PCT/FR2007/001655
(87) Numéro de publication internationale: WO 2008/043916

(56) Documents cités:
- US-A1- 2006 015 495
- TAT SENG CHUA ET AL: "Fast signature-based color-spatial image retrieval" MULTIMEDIA COMPUTING AND SYSTEMS '97. PROCEEDINGS., IEEE INTERNATIONAL CONFERENCE ON OTTAWA, ONT., CANADA 3-6 JUNE 1997, LOS ALAMITOS, CA, USA,IEEE COMPUT. SOC, US, 3 juin 1997 (1997-06-03), pages 362-369, XP010239209 ISBN: 0-8186-7819-4
- ARGAMON-ENGELSON S: "Using image signatures for place recognition" PATTERN RECOGNITION LETTERS, NORTH-HOLLAND PUBL. AMSTERDAM, NL, vol. 19, no. 10, août 1998 (1998-08), pages 941-951, XP004148121 ISSN: 0167-8655

## Description

L'invention concerne un procédé de recherche et de reconnaissance rapides d'une image numérique représentative d'au moins un motif graphique parmi une pluralité d'images numériques, dite banque d'images numériques, notamment parmi un flux d'images numériques, dite banque dynamique d'images numériques.

L'accroissement considérable du volume d'images numériques générées chaque jour dans tous les secteurs de la vie et des affaires pose le problème de la recherche d'une information visuelle spécifique et pertinente parmi la quantité d'images disponibles.

A titre d'exemple, si l'on considère uniquement les images numériques de télédiffusion du système Eutelsat, pas moins de 100 téra octets d'images sont générés chaque jour.

Avec les techniques connues, il est aujourd'hui quasiment impossible de procéder à la vérification de l'ensemble de ces images en vue notamment de s'assurer que leurs contenus sont conformes aux règles en vigueur dans le pays de diffusion ou compatibles avec le type de public visé par le programme diffusé.

De plus, il n'existe pas à l'heure actuelle de technique automatique satisfaisante pour qu'un annonceur puisse vérifier que son annonce a été diffusée conformément aux spécifications d'un contrat passé avec un diffuseur. Il n'existe pas non plus de technique satisfaisante pour qu'un distributeur de programmes puisse vérifier que ses programmes ne sont pas diffusés sans son accord ou pour qu'un industriel puisse vérifier que ses produits ne sont pas exposés en ligne chez un revendeur non agrée ou pour qu'un professionnel puisse s'assurer que ses marques et/ou logos ne sont pas reproduits et diffusés sans son autorisation, etc.

En d'autres termes, il n'existe pas de procédé et de dispositif automatiques, robustes, rapides, et utilisables par quiconque pour parvenir à détecter une image numérique prédéterminée comprenant au moins un motif graphique parmi une très grande quantité d'images numériques y compris parmi des flux d'images.

Les procédés connus de recherche d'une image parmi une banque d'images comprennent typiquement une étape d'attribution d'un descripteur d'image à l'image recherchée, une étape d'attribution d'un descripteur d'image à chaque image de la banque d'images et une étape de comparaison de ces descripteurs aux fins de déceler deux descripteurs identiques ou proches. La qualité d'un tel procédé dépend notamment de la qualité du descripteur d'image choisi pour représenter une image et de la qualité du comparateur choisi pour comparer deux descripteurs. Par ailleurs, pour qu'un tel procédé puisse être mis en oeuvre, il convient que le descripteur d'une image soit moins volumineux que l'image qu'il décrit, ce qui permet de procéder à une comparaison de deux descripteurs de manière plus rapide qu'une comparaison directe entre les images.

Les descripteurs peuvent être sémantiques, c'est-à-dire qu'ils peuvent comprendre une description sémantique des scènes véhiculées par les images. Cette technique est notamment utilisée par la plupart des moteurs de recherche d'images sur Internet.

Néanmoins, les techniques à descripteurs sémantiques sont totalement inadaptées à la reconnaissance d'une image parmi un flux d'images, notamment parmi un flux d'images de 100 téra octets, tel que le flux diffusé quotidiennement par le système Eutelsat.

D'autres procédés génèrent des descripteurs d'images à partir d'informations directement extraites des images, par exemple, une valeur représentative de la texture de l'image, des informations représentatives de la forme des contours des objets présents dans l'image, un ou plusieurs histogrammes d'une ou plusieurs régions de l'image, etc.

Ces procédés permettent de traiter les images sans nécessiter une analyse a priori des images.

La qualité d'un tel procédé est directement liée à la qualité des descripteurs générés. Plus le descripteur est volumineux et plus il est susceptible de contenir de l'information discriminante. Un tel descripteur est donc susceptible d'être robuste aux distorsions géométriques et aux altérations photométriques. En revanche, la taille d'un descripteur est inversement proportionnelle à la rapidité de la reconnaissance d'une image dans une banque d'images. Dès lors, la qualité d'un descripteur repose sur ces deux paramètres a priori incompatibles.

FR 2 845 186 décrit un procédé de mesure de similarité entre images dans lequel chaque image est segmentée en une pluralité de segments ; ces segments sont répartis dans différentes classes, chaque classe étant représentative d'une orientation prédéterminée ; un histogramme des segments par classe d'orientation est élaboré ; un histogramme du nombre de pixels par segment d'une même classe est élaboré ; les histogrammes de deux images sont comparés pour donner une mesure de similarité.

Selon ce procédé, pour chaque image, l'extraction de segments consiste à effectuer une détection des contours de l'image par l'application de gradients ; à affiner les zones ainsi relevées de manière à supprimer les contours épais ; à réaliser des tests de connectivité pour supprimer les pixels isolés ; et à rechercher et supprimer les jonctions de lignes de contours de manière à obtenir des portions de droites.

Ces étapes, préalables à l'élaboration des histogrammes et à la comparaison de ces derniers, sont consommatrices en temps de calcul et en mémoire. Les descripteurs générés sont volumineux et peu adaptés à une comparaison rapide des uns par rapport aux autres.

Dès lors, un tel procédé est inadapté au traitement de grandes banques d'images, notamment au traitement de grandes banques d'images par un dispositif grand public, c'est-à-dire par un dispositif informatique présentant des caractéristiques technique et une configuration standards -processeur de 1 à 2 GHz, mémoire vive de l'ordre de 512 Mo, etc. -, que l'on trouve couramment dans les magasins spécialisés en informatique.

D'autres procédés de mesures de similarités sont décrits dans "Fast signature-based color-spatial image retrieval" par Tat Seng Chua publié dans MULTIMEDIA COMPUTING AND SYSTEMS '97. PROCEEDINGS; ainsi que dans "Using image signatures for place recognition" par Shlomo Argamon-Engelson publié dans PATTERN RECOGNITION LETTERS vol. 19, no. 10.

US 2006/0015495 décrit un procédé de mesure de similarités entre images dans lequel chaque image est redimensionnée selon des dimensions prédéterminées ; chaque image est divisée en une pluralité de sous-images ; pour chaque sous-image, *N* valeurs sont calculées suivant *N* procédés ; pour chacun de ces procédés, un modèle statistique est élaboré à partir des valeurs obtenues pour l'ensemble des sous-images ; une mesure de similarité entre images est réalisée par une mesure de similarité entre les modèles statistiques.

Ce procédé nécessite également une puissance de calcul non adaptée pour une mise en oeuvre par un dispositif destiné au grand public.

Dans ce contexte, l'invention vise à proposer un procédé de recherche et de reconnaissance d'une image parmi une pluralité d'images qui soit extrêmement rapide et ne nécessite pas une grande puissance de calcul.

L'invention vise également à proposer un procédé de recherche et de reconnaissance d'une image parmi une pluralité d'images qui puisse être mis en oeuvre avec l'aide d'un micro-ordinateur présentant des caractéristiques techniques standards -processeur de 1 à 2 GHz, mémoire vive de l'ordre de 512 Mo, etc. -.

L'invention vise en particulier à proposer un procédé de recherche et de reconnaissance d'une image parmi une pluralité d'images qui puisse permettre le traitement d'au moins 30 millions d'images par seconde sur un micro-ordinateur équipé d'un processeur cadencé à 2GHz.

L'invention vise également un procédé de recherche et de reconnaissance d'une image parmi une pluralité d'images qui puisse permettre la génération de descripteurs d'images qui ne nécessite pas plus de 30 octets par descripteur.

L'invention vise également à proposer un procédé permettant la recherche et la reconnaissance d'une image parmi un flux d'images dynamiques.

L'invention vise également à proposer un procédé permettant la recherche et la reconnaissance d'une image parmi une pluralité de séquences vidéo, chaque séquence étant constituée d'une pluralité d'images numériques.

Pour ce faire, l'invention concerne un procédé de recherche et de reconnaissance rapides d'une image numérique prédéterminée, dite image recherchée, représentative d'au moins un motif graphique, parmi une pluralité d'images numériques, dite banque d'images, dans lequel :
- un index, dit index de référence, est associé à ladite image recherchée,
- pour chaque image de ladite banque d'images, un index, dit index répertorié, est associé à cette image et transmis à un répertoire d'index,
- pour chaque index répertorié dudit répertoire d'index,
   - une mesure de similarité, dite distance, entre cet index répertorié et ledit index de référence est évaluée et transmise à un comparateur,
   - ladite distance évaluée est comparée à un seuil prédéterminé par ledit comparateur de manière à déterminer si l'image associée à cet index répertorié est similaire, audit seuil de comparaison près, à ladite image recherchée,
**caractérisé en ce que** chaque index -répertorié et de référence- est une matrice bidimensionnelle de dimensions *m* × *n, m* et *n* étant des entiers prédéterminés, générée par les étapes suivantes :
- l'image numérique associée à cet index est transmise à un module de ré-échantillonnage de cette image adapté pour fournir une image numérique, dite image normalisée, présentant des dimensions *c*.*m* × *d.n,* où *c* et *d,* sont des entiers prédéterminés,
- ladite image normalisée est transmise à un module de traitement de cette image adapté pour effectuer *p* traitements, indicés de 1 à *p,* de l'image normalisée par *p* opérateurs mathématiques prédéterminés, pour fournir *p* images numériques, dites images caractéristiques, *p* étant un entier prédéterminé, chaque image caractéristique étant constituée de *m* × *n* sous-images, chaque sous-image présentant des dimensions *c* × *d* ,
- chaque image caractéristique est réduite pour donner une image, dite image réduite, présentant des dimensions *m* × *n*, ladite image réduite étant générée en remplaçant chaque sous-image de cette image caractéristique par au moins une valeur, dite valeur représentative de cette sous-image, déterminée comme fonction des *c* × *d* pixels de cette sous-image,
- une fonction, dite fonction de sélection, est déterminée pour pouvoir sélectionner parmi p valeurs, au moins une valeur, dite valeur élue,
- à chaque élément (*i, j*) , *i ∈* [1,*m*], *j* ∈ [1,*n*]; de cet index, est attribué l'indice du traitement dont résulte l'image caractéristique dont découle l'image réduite qui comprend ladite valeur élue par ladite fonction de sélection appliquée aux *p* pixels (*i,j*) des *p* images réduites.

Dans tout le texte, on entend par image numérique recherchée, une image qui comprend au moins un motif graphique spécifique prédéterminé recherché. Un procédé selon l'invention permet de rechercher et de reconnaître parmi une banque d'images, au moins une image numérique qui comprend au moins ce motif graphique. L'image numérique décelée par le procédé selon l'invention peut comprendre uniquement le motif graphique recherché ou des motifs additionnels.

Pour chaque image, l'index généré est utilisé comme un descripteur de cette image.

Les étapes de génération des index répertoriés et de l'index de référence, dites ci-après procédé d'indexation, permettent la génération d'index de manière rapide et sans nécessiter une puissance de calcul importante. Les expériences menées par les inventeurs ont en outre montré que de tels index sont non seulement simples et rapides à générer, mais ils permettent de surcroît une très bonne discrimination entre les images dont ils découlent. De tels index permettent ainsi d'obtenir des résultats inégalés à ce jour, en terme de vitesse d'exécution, de quantité d'images traitées à la seconde, de pouvoir discriminant, de robustesse à l'altération photométrique et aux distorsions géométriques, et de facilité de mise en oeuvre.

La pierre angulaire d'une génération d'index selon l'invention réside dans le fait, qu'à chaque élément de l'index est attribuée une valeur qui représente un type de traitement effectué et non une valeur résultante du traitement effectué. Dès lors, un index selon l'invention peut être mémorisé dans une mémoire d'un micro-ordinateur avec un nombre de bits bien inférieur au nombre de bits nécessaires pour mémoriser un descripteur selon l'art antérieur. En particulier, un élément d'un index selon l'invention peut prendre une valeur parmi *p* valeurs possibles alors qu'un élément d'un descripteur de l'art antérieur peut, en général, prendre une valeur parmi l'ensemble des valeurs que peut prendre un pixel de l'image associée à ce descripteur. Dès lors, un index selon l'invention peut être mémorisé dans une mémoire par (*m*×*n)*×log₂ *p* bits. Un index selon l'invention peut donc être extrêmement compact. De plus, il contient une information très discriminante, cette dernière étant représentative des traitements effectués sur l'image associée à cet index.

Dès lors, un pan d'applications inenvisageables jusqu'à aujourd'hui est susceptible de voir le jour. En particulier, un procédé selon l'invention permet de scruter l'ensemble des images diffusées chaque jour sur les différents média, tels que les médias télédiffusées par satellites, dans l'optique notamment de détecter une image particulière, de relever des marques et/ou logos, etc. Un procédé selon l'invention est également adapté pour déceler dans les flux de données graphiques échangés chaque jour sur Internet, notamment par les protocoles poste à poste (plus connue sous le terme anglais peer-to-peer), une image ou une portion d'image protégée par un ou plusieurs droits d'auteur.

Avantageusement et selon l'invention, pour chaque index répertorié dudit répertoire :
- ladite image associée à cet index répertorié est transmise à un dispositif de lecture et d'analyse de cette image si ledit comparateur a déterminé que la distance entre cet index répertorié et ledit index de référence est inférieure audit seuil prédéterminé,
- un dispositif de signalement, associé à une interface homme/machine, est activé pour indiquer à un utilisateur la reconnaissance de ladite image recherchée parmi ladite banque d'images si ledit comparateur a déterminé que ladite distance entre cet index répertorié et ledit index de référence est inférieure audit seuil prédéterminé.

Un procédé selon l'invention prévoit la création d'un répertoire d'index à partir duquel des distances entre chaque index répertorié et l'index de référence sont évaluées de manière à déceler une distance inférieure à un seuil prédéterminé.

Selon une variante de l'invention, dès qu'une distance inférieure à un seuil prédéterminée est détectée, un dispositif de signalement est activé de manière à pouvoir indiquer à un utilisateur la reconnaissance de l'image recherchée. De même, dès qu'une distance inférieure au seuil prédéterminé est détectée, l'image de la banque d'image correspondante est lue par un dispositif de lecture et d'analyse. Ce dispositif de lecture et d'analyse peut être de tout type. Il peut, selon une variante de l'invention, être adapté pour afficher l'image sélectionnée, ou en extraire des informations, tel que le nom de l'image, l'emplacement mémoire de l'image, etc. Un tel dispositif de lecture et d'analyse peut comprendre un micro-ordinateur. De même, un dispositif de signalement peut être de tout type. Il peut notamment comprendre un micro-ordinateur adapté pour émettre un signal sonore dès qu'une reconnaissance est réussie ou afficher un message sur un écran.

Un procédé selon l'invention dont chaque image est associée à un index généré selon le procédé d'indexation précédemment décrit permet de mesurer la similarité entre cette image ou portion d'image et une image de référence qui comprend un motif graphique. Pour ce faire, une mesure de similarité, dite distance, entre l'index de cette image et l'index de l'image de référence, est évaluée. Cette distance est alors transmise à un comparateur qui la compare à un seuil prédéterminé.

Tout type de comparateur peut être utilisé. De même tout type de mesure de similarité peut être évaluée. Il peut s'agir d'une distance au sens mathématique du terme ou d'un autre type de mesure. Il peut par exemple s'agir d'une distance euclidienne connue, d'une distance de Manhattan, d'une distance quadratique, etc.

Néanmoins, avantageusement et selon l'invention, la mesure de similarité, dite distance, entre un index répertorié et ledit index de référence est évaluée par les étapes dans lesquelles :
- ladite distance est initialisée à *m* × *n*,
- pour chaque élément (*i,j*), *i ∈* [1*,*m], *j* ∈ [1,*n*] dudit index de référence, la valeur de cet élément est comparée à la valeur de l'élément (*i,j*) dudit index répertorié et ladite distance est décrémentée de 1 si ces valeurs sont égales.

Dès lors, pour tout index selon l'invention présentant des dimensions *m* × *n*, une mesure de distance entre deux index égale à *m* × *n* est représentative de deux index éloignés. En revanche, une mesure de distance nulle est représentative de deux index identiques.

En ce sens, une mesure de similarité selon cette variante de l'invention est une distance métrique, c'est-à-dire qu'elle vérifie les conditions de symétrie, de séparation et d'inégalité triangulaire. Dans toute la suite, cette mesure de similarité selon cette variante de l'invention est dite distance métrique selon l'invention.

Néanmoins, selon un autre mode de réalisation, la mesure de similarité, dite distance, entre un index répertorié et l'index de référence peut être réalisé en initialisant la distance à 0 et en incrémentant de 1 la valeur de la distance dès que la valeur d'un élément (*i,j*)*, i ∈* [1*,*m], *j* ∈ [1,*n*] de l'index de référence est égal à la valeur de l'élément (*i*, *j*) de l'index répertorié. Dans ce cas, une mesure de distance entré deux index égale à *m* × *n* est représentative de deux index identiques et, une mesure de distance nulle est représentative de deux index éloignés.

Dans ce cas, une image associée à un index répertorié est transmise au dispositif de lecture et d'analyse de cette image si ladite distance est supérieure au seuil prédéterminé et le dispositif de signalement, associé à l'interface homme/machine, est activé pour indiquer à un utilisateur la reconnaissance de l'image recherchée parmi ladite banque d'images si ladite distance est supérieure au seuil prédéterminé.

Dans toute la suite, cette mesure de similarité entré deux index est dite distance non métrique selon l'invention.

Un utilisateur peut déterminer différents seuils pour la mesure de similarité entre deux images.

Néanmoins, dans le cas de l'utilisation d'une distance métrique selon l'invention, ledit seuil prédéterminé est avantageusement compris entre 0 et (*m* × *n)*/*p.*

Dans le cas de l'utilisation d'une distance non métrique selon l'invention, le seuil prédéterminé est avantageusement compris entre (*m* × *n*)*lp* et *m* × *n*.

Selon l'invention, chacun des *m* × *n* éléments d'un index pouvant prendre une valeur parmi *p* valeurs, la probabilité que deux index aléatoires soient identiques est égale à (*m* × *n)* / *p.* Dès lors, un seuil compris entre 0 et (*m* × *n)*/*p*, dans le cas de l'utilisation d'une distance métrique selon l'invention, est représentatif d'une similarité significative entre les deux images associées.

Un procédé selon l'invention et un procédé d'indexation selon l'invention comprennent avantageusement une étape dans laquelle *p* traitements de l'image normalisée par *p* opérateurs sont réalisés.

Ces traitements sont réalisés par un module de traitement, qui est avantageusement mis en oeuvre par un micro-ordinateur.

Pour cette étape, tous types d'opérateurs peuvent être utilisés. Il peut s'agir d'opérateurs destinés à faire ressortir une ou plusieurs caractéristiques de l'image normalisée.

Néanmoins, avantageusement et selon l'invention, chacun des p traitements d'une image normalisée par un opérateur mathématique pour fournir une image caractéristique est adapté pour effectuer un filtrage spatial de l'image normalisée.

Un filtrage spatial d'une image normalisée est adapté pour augmenter certains contrastes de l'image, pour détecter des contours ou au contraire pour réduire les variations au sein de l'image. Il peut s'agir d'un filtrage spatial du type passe-haut destiné à faire apparaître les variations de lumière, d'un filtrage passe-bas destiné à atténuer les variations de lumière ou d'un filtrage passe-bande.

Les opérateurs selon l'invention peuvent être choisis de manière à effectuer un filtrage directionnel, c'est-à-dire à mettre en évidence des variations d'intensité le long d'axes prédéterminés, verticaux, horizontaux ou diagonaux.

Le filtrage spatial est avantageusement réalisé par des filtres de convolution, c'est-à-dire par une convolution entre ladite image normalisée et une matrice de convolution prédéterminée.

Avantageusement et selon l'invention, chaque matrice de convolution est choisie parmi les matrices de Sobel, les matrices de Prewitt, les matrices Sigma, les matrices de Roberts, les matrices du Laplacien, les matrices du Gradient.

Un procédé de recherche et de reconnaissance selon l'invention et un procédé d'indexation selon l'invention comprennent avantageusement une étape dans laquelle chaque image caractéristique est réduite pour donner une image, dite image réduite, présentant des dimensions *m*×n, ladite image réduite étant générée en remplaçant chaque sous-image de cette image caractéristique par au moins une valeur, dite valeur représentative de cette sous-image, déterminée comme fonction des *c* × *d* pixels de cette sous-image.

Avantageusement et selon l'invention, ladite valeur représentative d'une sous-image de dimension *c* × *d* est la valeur du pixel de cette sous-image dont la valeur est maximale.

Un procédé de recherche et de reconnaissance selon l'invention et un procédé d'indexation selon l'invention comprennent avantageusement une étape dans laquelle une fonction, dite fonction de sélection, est déterminée pour pouvoir sélectionner parmi *p* valeurs, au moins une valeur, dite valeur élue.

Avantageusement et selon l'invention, ladite fonction de sélection d'une valeur élue parmi *p* valeurs est adaptée pour sélectionner la valeur maximale de ces *p* valeurs.

Avantageusement et selon l'invention, *p* est supérieur à 6, notamment compris entre 6 et 128.

Un grand nombre d'opérateurs permet de générer un grand nombre d'images caractéristiques et permet de surcroît de conférer à chaque élément de chaque index une grande plage de valeurs possibles, chaque élément pouvant prendre une valeur entière comprise entre 1 et *p*.

Un petit nombre d'opérateurs permet en revanche une plus grande vitesse de calcul, moins d'images caractéristiques devant être générées.

Par ailleurs, *p* définissant le nombre de valeurs que peut prendre un élément d'un index généré par un procédé d'indexation selon l'invention, une grande valeur de *p* implique qu'une similarité entre deux index ne peut être décelée que si les deux images dont ils découlent respectivement sont quasiment identiques, alors qu'une petite valeur de *p* permet d'apparier deux images dont la similarité tient moins compte des détails.

La valeur de *p* est donc avantageusement adaptée à l'objectif poursuivi -recherche d'une image de la banque d'images strictement identique à l'image recherchée, recherche d'une image globalement similaire, etc. -.

Les expériences menées par les inventeurs ont montré que des valeurs de *p* comprises entre 6 et 128 fournissent de bons résultats, pour l'ensemble des objectifs poursuivis. Néanmoins, rien n'empêche d'utiliser un plus grand nombre d'opérateurs pour certaines applications spécifiques.

De même, la taille des index peut être choisie et adaptée aux types d'images contenues dans la banque d'images au sein de laquelle la recherche est effectuée.

Un procédé selon l'invention mis en oeuvre par un micro-ordinateur comprenant une mémoire de masse pour le stockage des index nécessite (*m* × *n*) × log₂ *p* bits par index.

Dès lors, les valeurs de *p, n* et *m* sont avantageusement choisies de manière à ce que la place occupée par un index en mémoire d'un dispositif informatique soit compatible d'une part avec les contraintes matérielles et d'autre part avec les performances recherchées.

Pour une valeur de *p* égale à 8, et pour obtenir des index dont la place occupée en mémoire est de l'ordre de 18 octets, il convient que le produit *m* × *n* soit de l'ordre de 7x7.

Avantageusement et selon l'invention, *n* et *m* sont supérieurs à 6, notamment compris entre 6 et 20.

Néanmoins, rien n'empêche d'utiliser d'autres valeurs pour certaines applications spécifiques.

De même, différentes valeurs peuvent être attribuées aux entiers *c* et *d*.

Avantageusement et selon l'invention, les entiers *c* et *d* sont égaux de telle sorte que les sous-images de chaque image caractéristique sont carrées.

Avantageusement et selon l'invention, *c* et *d* sont supérieurs à 2, notamment compris entre 2 et 5.

Néanmoins, rien n'empêche d'utiliser d'autres valeurs pour des applications spécifiques.

Un procédé de recherche et de reconnaissance d'une image parmi une banque d'images selon l'invention et un procédé d'indexation selon l'invention peuvent générer les index de la banque d'images avant de générer l'index de l'image recherchée ou alors générer l'index de l'image recherchée avant de générer les index de la banque d'images.

Dans ce dernier cas, la génération des index répertoriés de la banque d'images peut être réalisée d'un seul tenant avant l'évaluation des distances entre les index répertoriés et l'index de référence, ou alors être réalisée au fur et à mesure du traitement de la banque d'images. Cette architecture est particulièrement adaptée à des banques d'images dynamiques, évoluant au cours du temps, telles que par exemple, des banques d'images obtenues et enrichies en continue par téléchargement sur Internet ou acquisition par télédiffusion.

Un procédé selon l'invention est donc particulièrement adapté à la recherche et à la reconnaissance d'une image comprenant un motif graphique spécifique dans un flux d'images.

Un procédé selon l'invention est également adapté pour générer le répertoire d'index de la banque d'images et mémoriser ce répertoire d'index de la banque d'images dans une mémoire de masse préalablement à la génération d'un index d'une image recherchée. Cela permet notamment de dissocier dans le temps les étapes de création d'un ou plusieurs répertoires d'index d'une ou plusieurs banques d'images et les étapes de reconnaissance d'une image recherchée parmi l'une ou plusieurs de ces banques d'images.

Un procédé selon l'invention est également adapté pour rechercher une image ou une séquence d'images dans une pluralité de séquences vidéo.

Dans ce cas, avantageusement et selon l'invention, la lecture par le dispositif de lecture et d'analyse de l'image numérique associée à l'index répertorié dont la distance par rapport audit index de référence est inférieure au seuil prédéterminé comprend une étape dans laquelle des attributs de la séquence vidéo -nom de la séquence, type de séquence, etc.- comprenant cette image sont transmis à une interface homme/machine.

Un procédé selon l'invention est également adapté pour rechercher une image flash subliminale insérée dans une séquence vidéo.

Pour ce faire, avantageusement et selon l'invention, ladite image recherchée est une image flash subliminale insérée dans une séquence vidéo et ladite banque d'images est cette séquence vidéo.

L'invention concerne en outre un procédé de recherche et de reconnaissance d'une image parmi une pluralité d'images caractérisé en combinaison par tout ou partie des caractéristiques mentionnées ci-dessus ou ci-après.
- D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique d'un procédé de recherche et de reconnaissance d'une image parmi une banque d'images selon l'invention,
- la figure 2 est une vue schématique d'un procédé d'indexation d'une image selon un mode de réalisation de l'invention,
- la figure 3 est une vue schématique de filtres spatiaux formant des opérateurs de traitement des images numériques selon un mode de réalisation de l'invention,
- la figure 4 est une vue schématique d'un dispositif adapté pour mettre en oeuvre un procédé selon l'invention,
- la figure 5 est une représentation schématique matricielle d'un exemple d'une image normalisée,
- les figures 6 à 14 sont des représentations schématiques matricielles d'images numériques obtenues par un procédé d'indexation selon l'invention à partir de l'image normalisée de la figure 5.

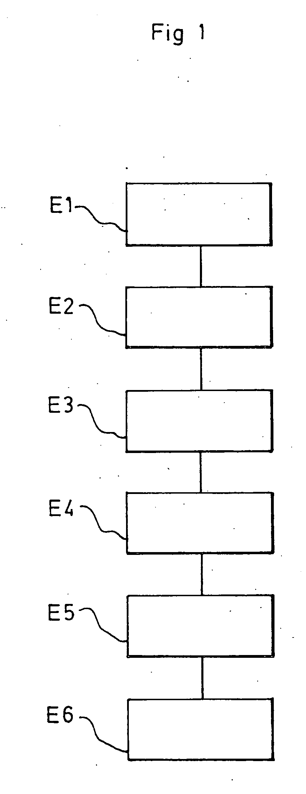

Tel que représenté sur la figure 1, un procédé selon l'invention de recherche d'une image, dite image recherchée, parmi une pluralité d'images, dite banque d'images, comprend une étape E1 d'association d'un index, dit index de référence, à ladite image recherchée.

Un procédé selon l'invention comprend également une étape E2 d'association, pour chaque image de ladite banque d'images, d'un index, dit index répertorié. Cette étape E2 comprend également une phase de transmission de chaque index répertorié à un répertoire d'index. Ce répertoire d'index peut, par exemple, être mémorisé dans une mémoire vive ou une mémoire de masse d'un dispositif informatique, tel qu'un micro-ordinateur.

Les étapes E1 et E2 peuvent être réalisées dans un ordre quelconque.

Un procédé selon l'invention comprend également une étape E3 d'évaluation d'une mesure de similarité, dite distance, entre les index répertoriés du répertoire d'index et l'index de référence. Cette étape E3 comprend également une phase de transmission de la distance évaluée à un comparateur.

Un procédé selon l'invention comprend également une étape E4 de comparaison de la distance évaluée à un seuil prédéterminé. Cette étape de comparaison permet de déterminer si la distance évaluée est supérieure ou non à un seuil prédéterminé.

Selon un mode de réalisation avantageux de l'invention, la distance évaluée à l'étape E3 est une distance métrique, c'est-à-dire qu'une valeur de distance nulle est représentative de deux index identiques.

Dans ce cas, si l'étape E4 a permis de déterminer que la distance entre un index répertorié et l'index de référence est inférieure au seuil prédéterminé, le procédé selon l'invention comprend une étape E5 de transmission de l'image, associée à l'index répertorié dont la distance évaluée par rapport à l'index de référence est inférieure au seuil prédéterminé, à un dispositif de lecture et d'analyse de cette image, et une étape E6 d'activation d'un dispositif de signalement adaptés pour indiquer à un opérateur que l'image recherchée à été trouvée dans ladite banque d'images.

Les étapes E2, E3, E4, E5 et E6 peuvent être réalisées séquentiellement pour chaque image de la banque d'images de telle sorte que la reconnaissance d'une image recherchée dans la banque d'images puisse être signalée à un opérateur avant le traitement complet de la banque d'images. Cela est particulièrement utile si l'objectif du traitement est la recherche d'une seule copie de ladite image recherchée dans la banque d'images.

Néanmoins, selon un autre mode de réalisation, à chaque étape, l'intégralité de la banque d'images est traitée avant l'exécution de l'étape suivante. Dès lors, chacune des étapes E2, E3, E4, E5 et E6 fournit l'ensemble des données nécessaires à l'étape suivante, avant l'exécution de l'étape suivante.

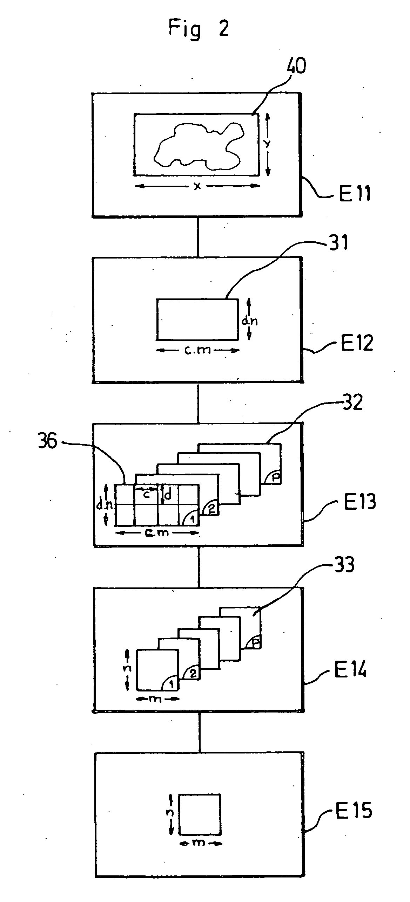

Selon un mode préférentiel de réalisation de l'invention, tel que représenté sur la figure 2, un index répertorié est généré directement pour chaque image numérique de la banque d'images à partir des données de cette image numérique. Chaque index répertorié est ainsi directement représentatif de l'image auquel il est associé. Ce procédé de création d'un index à partir d'une image comprend selon un mode préférentiel de réalisation de l'invention les étapes suivantes.

Dans une première étape E11, l'image numérique associée à cet index est transmis à une unité de traitement de cette image. Cette image numérique présente des dimensions *x* × *y, x* et *y* étant des entiers quelconques spécifiques à chaque image.

Cette image numérique est ré-échantillonnée dans une deuxième étape E12 en une autre image numérique, dite image normalisée, qui présente des dimensions *c.m* × *d.n*, où *c, d, m* et *n* sont des entiers prédéterminés.

Cette normalisation de l'image est réalisée par un module de ré-échantillonnage. Ce module peut être situé localement, par exemple dans un micro-ordinateur ou à distance. Ce module de ré-échantillonnage est avantageusement réalisé par des moyens logiciels.

Toutes les images normalisées par le module de ré-échantillonnage présentent ainsi les mêmes dimensions.

La normalisation d'une image peut également comprendre, de manière connue en soi, une étape de conversion d'une image couleur comprenant plusieurs niveaux de couleurs en une image à niveaux de gris.

Les valeurs des entiers *m* et *n* peuvent être choisis librement. Néanmoins, comme indiqué dans la suite, l'index construit à partir d'une image présente des dimensions *m*×*n*. Dès lors, pour obtenir un index qui ne soit pas trop volumineux, mais soit néanmoins suffisamment représentatif de l'image à laquelle il est associé, les inventeurs ont, par expérience, déterminé que des valeurs de *m* et *n* de l'ordre de 7 procurent, en général, des résultats satisfaisants.

L'image normalisée est dans une troisième étape E13 subséquente, traitée par *p* opérateurs mathématiques indicés de 1 à *p* pour fournir *p* images numériques, dites images caractéristiques, *p* étant un entier prédéterminé.

Chaque opérateur est appliqué à l'image normalisée pour fournir une image caractéristique correspondante.

Selon un mode avantageux de réalisation de l'invention, tel que représenté sur la figure 2, chaque image caractéristique ainsi générée est elle-même indicée par l'indice de l'opérateur dont elle découle.

Chaque image caractéristique ainsi générée présente des dimensions *c.m* × *d*.*n* et est constituée par *m* × *n* sous-images, chaque sous-image présentant des dimensions *c* × *d.*

Tout type d'opérateur mathématique peut être utilisé. Néanmoins, selon un mode de réalisation de l'invention, chacun des *p* opérateurs mathématiques est un opérateur de filtrage spatial de l'image normalisée.

Un filtrage spatial permet de modifier la valeur d'un pixel proportionnellement aux variations d'intensité lumineuse de ses voisins. Un filtrage spatial peut ainsi être sensible à la présence ou à l'absence de telles variations lumineuses. Cela permet de faire ressortir certaines caractéristiques discriminantes de l'image.

Selon différents modes de réalisation de l'invention, les opérateurs peuvent être des filtres passe-haut, des filtres passe-bas ou des filtres passe-bande. Ces filtres peuvent être des filtres linéaires, c'est-à-dire que la valeur d'un pixel de l'image caractéristique est une combinaison linéaire des valeurs des pixels voisins ou des filtres non linéaire.

Ces opérateurs de filtrage spatial peuvent être des opérateurs connus comme les filtres de Prewitt, les filtres de Sobel, les filtres de Roberts, etc., ou des opérateurs dédiés.

Ces traitements sont réalisés par un module de traitement. Ce module de traitement peut être agencé localement, par exemple dans un micro-ordinateur, ou à distance. Ce module de traitement est avantageusement mis en oeuvre par des moyens logiciels.

Selon un mode de réalisation, *p* est fixé à 4 de telle sorte que chaque image normalisée est traitée par 4 opérateurs. Bien entendu, selon d'autres modes de réalisation, chaque image normalisée peut être traitée par un nombre inférieur ou un nombre supérieur d'opérateurs.

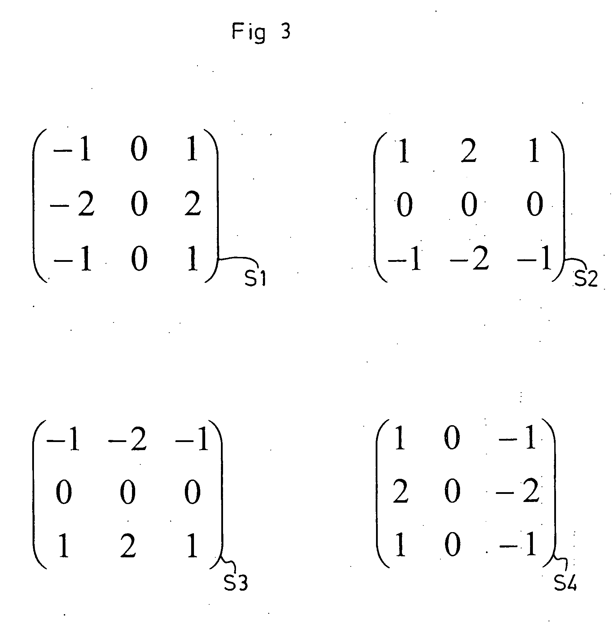

Selon un mode de réalisation, les opérateurs sont des opérateurs de convolution représentés par des noyaux de convolutions exprimés sous la forme de matrices de convolutions. Ces matrices sont, selon un mode de réalisation, des matrices de Sobel telles que représentées sur la figure 3. Ces opérateurs permettent de faire ressortir les variations d'intensité le long de l'axe vertical et le long de l'axe horizontal de l'image normalisée.

Si l'on considère un tel mode de réalisation dans lequel p est fixé à 4, le premier opérateur indicé peut être représenté par la matrice S1, connue sous le nom de matrice horizontale de Sobel. Le deuxième opérateur indicé peut être représenté par la matrice S2, connue sous le nom de matrice verticale de Sobel. Le troisième opérateur indicé peut être représenté par la matrice S3, transposée de la matrice S1. Le quatrième opérateur indicé peut être représenté par la matrice S4, transposée de la matrice S2.

Dès lors, à partir de chaque image normalisée, on obtient 4 images caractéristiques, chacune mettant en exergue des caractéristiques horizontales ou verticales de l'image.

Chacune des images caractéristiques générées par l'étape E13 est ensuite réduite dans une étape E14 pour donner une image, dite image réduite.

Chaque image réduite par l'étape E14 présente des dimensions *m*×*n*. Cette image réduite est générée en remplaçant chacune des *m*×*n* sous-images de l'image caractéristique dont elle découle par une valeur, dite valeur représentative de cette sous-image, déterminée comme fonction des *c* × *d* pixels de cette sous-image.

Selon un mode de réalisation, la valeur représentative de chaque sous-image est la moyenne des valeurs des *c* × *d* pixels de cette sous-image. Selon un autre mode de réalisation, la valeur représentative de chaque sous-image est la valeur médiane des valeurs des *c* × *d* pixels de cette sous-image. Tout type de fonction peut être utilisé pour déterminer une valeur représentative de chaque sous-image.

Selon un autre mode de réalisation, la valeur représentative de chaque sous-image est la valeur du pixel de cette sous-image dont la valeur est maximale. Dès lors, chacun des *m* × *n* pixels d'une image réduite est le pixel de valeur maximale parmi les *c* × *d* pixels de la sous-image dont il est issu.

Les inventeurs ont, par expérience, déterminé qu'une telle valeur représentative permet d'obtenir des résultats satisfaisants sans néanmoins recourir à des calculs compliqués et consommateurs en ressources.

Dans une dernière étape E15, une fonction, dite fonction de sélection, est déterminée pour pouvoir sélectionner parmi *p* valeurs, au moins une valeur, dite valeur élue.

Cette fonction est utilisée pour générer l'index de l'image initiale. L'index présente des dimensions *m* × *n*.

Chaque élément (*i,j*)*, i ∈* [1*,*m], *j* ∈ [1,*n*], de cet index, prend comme valeur l'indice du traitement dont résulte l'image réduite comprenant la valeur élue par ladite fonction de sélection appliquée aux *p* pixels (*i, j*) des *p* images réduites.

Chaque élément (*i, j*) , *i ∈* [1*,*m], *j* ∈ [1,*n*] de l'index créé peut ainsi prendre une valeur parmi l'ensemble {1, 2, ..., *p*}. La valeur de cet élément est déterminée par la fonction de sélection appliquée aux *p* éléments (*i, j*) des *p* images réduites.

Selon un mode avantageux de réalisation de l'invention, la fonction de sélection d'une valeur élue parmi *p* valeurs sélectionne la valeur maximale.

Dès lors, par exemple, dans le cas où *p* est fixé à 4, chaque élément de l'index créé peut alors prendre une valeur parmi l'ensemble {1, 2, 3, 4}. Si pour un élément donné (*i,j*)*,* la valeur de l'élément correspondant (*i, j*) de l'image réduite qui découle du 3^{ème} opérateur est maximale parmi les 4 valeurs (*i*,*j*) correspondantes, alors l'élément (*i,j*) de l'index prendra la valeur 3.

En d'autres termes, l'index construit par un procédé selon l'invention comprend les indices des opérateurs. Chaque élément de l'index indique l'opérateur qui a permis d'obtenir la valeur maximale dans une région donnée de l'image normalisée.

Les inventeurs ont déterminé qu'un tel procédé permet de fournir d'excellents résultats en termes de rapidité de calcul et en termes de discrimination entre les index et donc entre les images.

De plus, si m est fixé à 7, *n* est fixé à 8, et *p* est fixé à 8, alors, chaque index occupe (*m*×*n)*×log₂ *p* bits*,* c'est-à-dire 21 octets.

Dès lors, l'indexation d'une heure de programmes télédiffusés, par exemple par le système Eutelsat, nécessite environ 1.8 Mo d'espace mémoire. Un tel fichier d'index est mille fois moins volumineux que le même fichier vidéo au format MPEG2.

Par ailleurs, une telle construction d'un index permet de générer *p*^{(*m*×*n*)} index différents, c'est-à-dire, compte tenu des valeurs mentionnées, de l'ordre de 10⁵⁰ index différents, c'est-à-dire largement plus que la quantité de données numériques générées chaque année dans le monde et estimée à 10 exa-octets.

Selon l'invention, l'index de référence est généré à partir de l'image de référence par les mêmes étapes que la génération des index répertoriés.

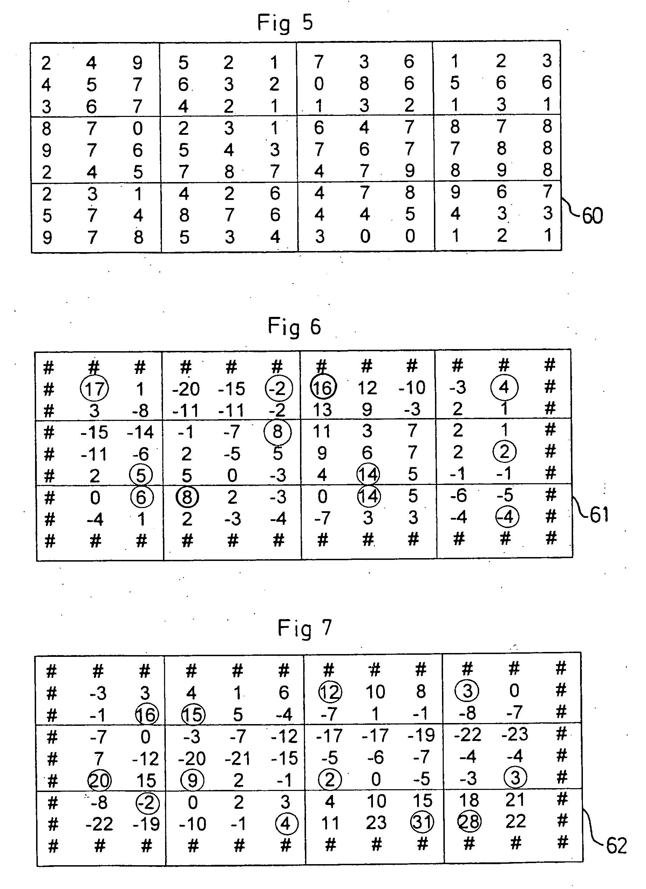

Un exemple concret de création d'un index à partir d'une image numérique est donné ci-après à partir des schémas des figures 5 à 14.

Dans cet exemple, *m, n,c* et *p* valent respectivement 4, 3, 3 et 4.
La figure 5 est une représentation schématique matricielle d'une image 60 normalisée. Cette image 60 normalisée présente des dimensions 12x9.
La figure 6 est une représentation schématique matricielle d'une image 61 caractéristique obtenue par convolution de l'image 60 normalisée de la figure 5 avec un premier opérateur tel que représenté par la matrice S1 de la figure 3.
La figure 7 est une représentation schématique matricielle d'une image 62 caractéristique obtenue par convolution de l'image 60 normalisée de la figure 5 avec un deuxième opérateur tel que représenté par la matrice S2 de la figure 3.

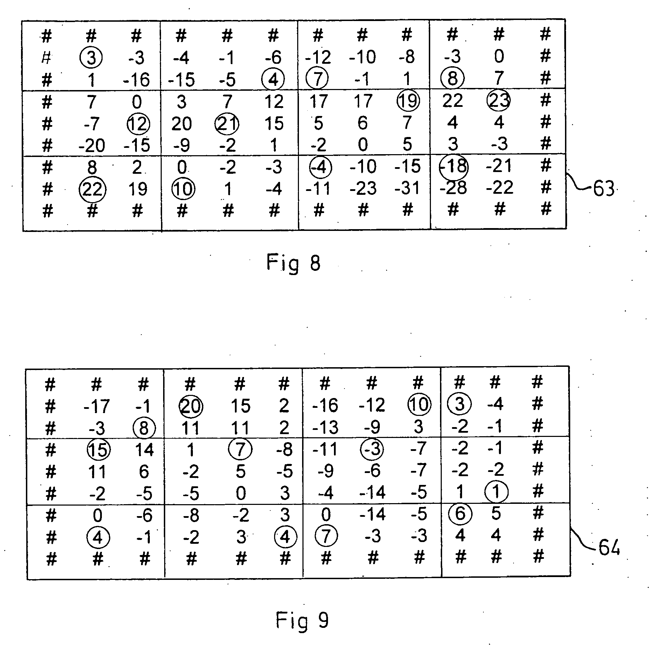

La figure 8 est une représentation schématique matricielle d'une image 63 caractéristique obtenue par convolution de l'image 60 normalisée de la figure 5 avec un troisième opérateur tel que représenté par la matrice S3 de la figure 3.
La figure 9 est une représentation schématique matricielle d'une image 64 caractéristique obtenue par convolution de l'image 60 normalisée de la figure 5 avec un quatrième opérateur tel que représenté par la matrice S4 de la figure 3.

Chacune des images 61, 62, 63, 64 caractéristiques est obtenue par convolution de l'image 60 normalisée par une matrice de convolution de dimensions 3x3. Dès lors, les valeurs des pixels de bordure de chacune de ces images caractéristiques ne peuvent pas être calculées. Ces valeurs non calculables sont représentées par le symbole « # » sur les figures 6, 7, 8 et 9.

Chacune des images 61, 62, 63, 64 caractéristiques ainsi obtenue est réduite dans une étape E13 pour fournir une image réduite. Pour ce faire, chaque sous-image de dimension 3x3 de chaque image caractéristique est remplacée par la valeur maximale de cette sous-image. Bien entendu, les valeurs non calculables représentées par le symbole « # » ne sont pas prises en compte pour l'évaluation de la valeur maximale de cette sous-image.

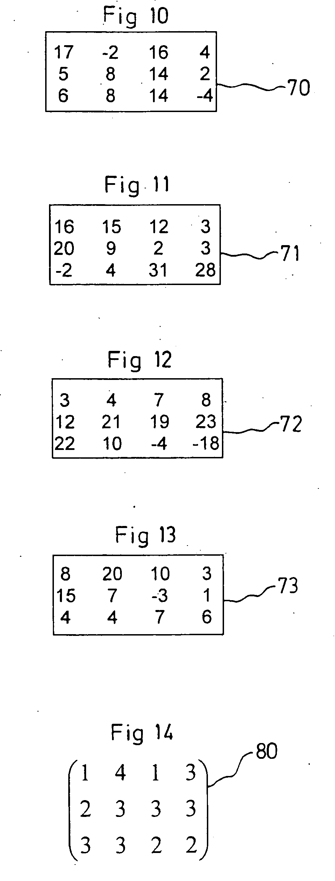

Les figures 10, 11, 12 et 13 sont des représentations schématiques des images réduites 70, 71, 72, 73 obtenues respectivement à partir des images 61, 62, 63, 64 caractéristiques des figures 6, 7, 8 et 9. Le pixel de valeur maximale de chaque sous-image de chaque image caractéristique est entouré d'un cercle à des fins de clarté sur les figures 6 à 9.

L'index 80 est ensuite obtenu par l'étape E15, en attribuant à chaque élément (*i,j*), *i ∈* [1*,*4], *j* ∈ [1,3]*,* de cet index 80, l'indice de l'opérateur dont résulte l'image réduite comprenant la valeur maximale parmi les 4 pixels (*i*,*j*) des 4 images réduites.

Par exemple, pour l'attribution d'une valeur à l'élément (1, 1) de l'index 80, on détermine quelle image réduite présente l'élément (1, 1) maximal. Selon cet exemple, l'élément (1, 1) de l'image 70 réduite de la figure 10 présente la valeur maximale. Cette image 70 réduite a été obtenue par réduction de l'image 61 caractéristique issue du traitement de l'image 60 normalisée par le premier opérateur. Cet élément (1, 1) prend donc la valeur « 1 ». En revanche, pour l'attribution d'une valeur à l'élément (4, 3) de l'index (80), on détermine que, parmi tous les éléments (4, 3) des images 70, 71, 72 et 73, l'élément dont la valeur est maximale appartient à l'image 71 réduite issue de l'image 62 caractéristique, elle-même obtenue par le deuxième traitement. L'élément (4, 3) de l'index 80 prend donc « 2 » comme valeur.

L'image schématique de la figure 5 peut donc être indexée, suivant un procédé d'indexation selon l'invention, par l'index tel que représenté sur la figure 14.

Selon l'invention et tel que représenté sur la figure 1, lorsque les index ont été créés, une distance entre chaque index répertorié et l'index de référence est évaluée dans l'étape E3.

Selon un mode de réalisation de l'invention, la distance D entre un index de référence I *ref* de dimension *m* × *n* et un index répertorié I *rep* de dimension *m* × *n* est calculée par les étapes suivantes :
- initialisation de la distance D à *m* × *n*,
- pour chaque élément (*i,j*)*, i ∈* [1*,*m], *j* ∈ [1,*n*] dudit index de référence I *ref*, la distance D est décrémentée de 1 si la valeur de cet élément est égale à la valeur de l'élément (*i,j*) dudit index répertorié I *rep*.

Dès lors, une valeur de distance nulle est représentative de deux index identiques, alors qu'une valeur de distance proche de *m* × *n* est représentative de deux index éloignés.

La distance D ainsi calculée est transmise à un comparateur adapté pour comparer cette distance à un seuil S dans une étape E4.

Tous types de comparateurs peuvent être utilisés pour mettre en oeuvre le procédé selon l'invention. Il peut s'agir d'un comparateur logiciel, par exemple un comparateur formé d'un microprocesseur et d'une mémoire vive.

Ce seuil S prédéterminé est selon ce mode de réalisation de préférence fixé entre 0 et (*m* × *n)* / *p*. Plus ce seuil est fixé proche de 0 et plus la reconnaissance sera précise.

Si la distance D est inférieure au seuil S, l'image recherchée à partir de laquelle a été mis en forme l'index de référence I *ref* est proche visuellement de l'image de la banque d'images à partir de laquelle a été mis en forme l'index répertorié I *rep*.

Selon l'invention, si cette reconnaissance a eu lieu, l'image de la banque d'images à partir de laquelle a été mis en forme cet index répertorié I *rep,* dit ci-après, l'image détectée, est transmise à un dispositif de lecture et d'analyse de cette image.

Ce dispositif de lecture et d'analyse peut être de tous types. Il peut comprendre des moyens d'affichage de cette image de manière à ce qu'un opérateur puisse éventuellement valider ou infirmer la reconnaissance effectuée. Ce dispositif de lecture et d'analyse peut éventuellement comprendre des moyens de traitement spécifique de cette image de manière à extraire d'autres caractéristiques de l'image.

De plus, selon l'invention, si cette reconnaissance a eu lieu, un dispositif de signalement, associé à une interface homme/machine, est activé pour indiquer à un utilisateur la reconnaissance de ladite image recherchée parmi ladite banque d'images.

Ce dispositif de signalement peut comprendre des moyens d'affichage de l'image détectée. Ce dispositif de signalement peut de manière générale être réalisé par tout type de dispositif adapté pour alerter un opérateur d'une reconnaissance réussie.

Un procédé selon l'invention peut être mis en oeuvre par un micro-ordinateur, notamment un micro-ordinateur comprenant un processeur cadencé à 2GHz.

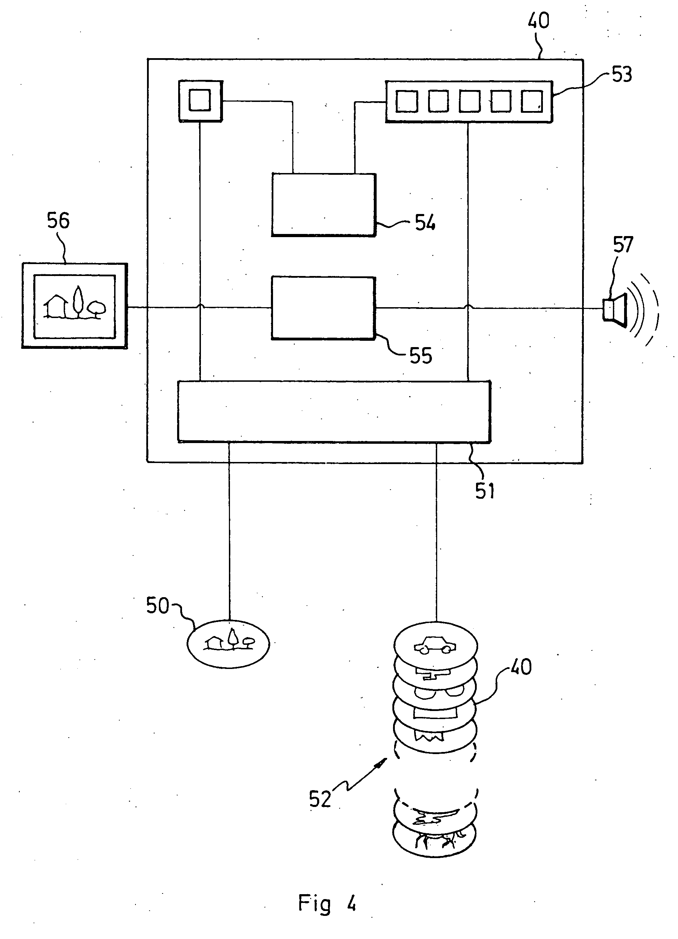

Un tel dispositif est représenté schématiquement sur la figure 4. Une image 50 est mémorisée en mémoire d'un micro-ordinateur 40. La mémorisation de cette image 50 peut être réalisée par tous moyens connus en soi, par exemple par lecture de l'image à partir d'un dispositif de mémoire externe, et transfert de cette image vers une mémoire de masse du micro-ordinateur. Cette image 50 est adaptée pour être transmise à une unité 51 centrale de traitement par l'intermédiaire d'un bus de communication, connu en soi. Une banque d'images 52 est également adaptée pour être transmise à cette unité 51 centrale de traitement. La liaison entre la banque d'images et l'unité 51 de traitement peut être de tout type. Il peut par exemple s'agir d'une liaison Internet équipée des protocoles connus. Cette unité 51 centrale de traitement comprend, selon ce mode de réalisation, un module de ré-échantillonnage d'une image et un module de traitement d'une image normalisée. L'unité 51 de traitement comprend de manière connue un microprocesseur et est associée à au moins une mémoire de masse pouvant comporter un ou plusieurs programmes d'ordinateur et au moins une mémoire vive adaptée pour stocker des données temporaires. La mémoire de masse est adaptée pour contenir un programme d'ordinateur adapté pour mettre en oeuvre et exécuter les étapes du procédé d'indexation selon l'invention. Ce programme est réalisé par des techniques connues de codage d'instructions. Il permet alors la génération d'un index de référence I *ref ,* à partir de l'image 50, et assure la mémorisation de cet index dans un espace mémoire de la mémoire vive ou de la mémoire de masse. De même, ce programme est réalisé de manière à ce qu'il puisse générer les index I *rep* de chaque image de la banque d'images 52 et assurer leur mémorisation dans un répertoire 53 d'index enregistré dans une mémoire de masse ou dans une mémoire vive. Chaque index I *rep* et l'index I *ref* sont traités par un programme 54 d'ordinateur stocké en mémoire de masse du micro-ordinateur pour évaluer une mesure de similarité entre ces index. Cette mesure de similarité, dite distance, est transmise à un comparateur 55, qui peut être réalisé par des moyens logiciels stockés dans la une mémoire du micro-ordinateur. Ce comparateur est adapté pour comparer la distance reçue avec un seuil prédéterminé. Ce seuil prédéterminé peut être stocké dans la mémoire vive ou la mémoire morte du micro-ordinateur. Si le comparateur détermine une distance métrique selon l'invention inférieure au seuil prédéterminé, l'unité 51 centrale de traitement est adaptée pour activer un dispositif 57 de signalement d'une reconnaissance réussie, qui peut être réalisé par un dispositif d'émission d'un signal sonore, tel qu'un haut parleur d'un micro-ordinateur. De plus, l'unité 51 centrale de traitement transmet l'image détectée à un dispositif de lecture et d'analyse de cette image de manière à extraire des informations de l'image, par exemple, son nom, sa taille, etc., de manière à les fournir à un opérateur par l'intermédiaire d'un écran par exemple. Ce dispositif de lecture et d'analyse peut également comprendre des moyens 56 d'affichage de cette image.

Bien entendu, un procédé de recherche et de reconnaissance selon l'invention et un procédé d'indexation selon l'invention peuvent être mis en oeuvre par d'autres moyens que les moyens informatiques décrits.

Un procédé de recherche et de reconnaissance d'une image parmi une pluralité d'images selon l'invention permet d'atteindre des performances inégalées à ce jour en terme de rapidité de traitement et de détections réussies et ouvre la voie vers une grande variété de nouvelles applications.

En particulier, un procédé selon l'invention permet la recherche et la reconnaissance d'une image numérique subliminale dans une séquence vidéo.

Un procédé selon l'invention permet également la recherche et la reconnaissance d'une image numérique représentative d'un motif protégée par au moins un droit d'auteur parmi un flux d'images numériques.

## Revendications

1. Procédé de recherche et de reconnaissance rapides d'une image (50) numérique prédéterminée, dite image recherchée, représentative d'au moins un motif graphique, parmi une pluralité d'images (40) numériques, dite banque (52) d'images, dans lequel :
- (El)un index, dit index de référence, est associé à ladite image (50) recherchée,
- (E2) pour chaque image (40) de ladite banque (52) d'images, un index, dit index répertorié, est associé à cette image (40) et transmis à un répertoire (53) d'index,
- pour chaque index répertorié dudit répertoire (53) d'index,
. (E3) une mesure de similarité, dite distance, entre cet index répertorié et ledit index de référence est évaluée et transmise à un comparateur (55),
. (E4) ladite distance évaluée est comparée à un seuil prédéterminé par ledit comparateur de manière à déterminer si l'image associée à cet index répertorié est similaire, audit seuil de comparaison près, à ladite image recherchée,
**caractérisé en ce que** chaque index -répertorié et de référence- est une matrice bidimensionnelle de dimensions *m* × *n*, *m* et *n* étant des entiers prédéterminés, générée par les étapes suivantes :
- (E12) l'image numérique (40 ; 50) associée à cet index est transmise à un module de ré-échantillonnage de cette image adapté pour fournir une image numérique, dite image (31) normalisée, présentant des dimensions *c*.*m* × *d.n,* où *c* et *d*, sont des entiers prédéterminés,
- (E13) ladite image normalisée est transmise à un module de traitement de cette image adapté pour effectuer *p* traitements, indicés de 1 à *p,* de l'image (31) normalisée par p opérateurs mathématiques prédéterminés (S1, S2, S3, S4), pour fournir *p* images numériques, dite images (32) caractéristiques, p étant un entier prédéterminé, chaque image (32) caractéristique étant constituée de *m* × *n* sous-images (36), chaque sous-image (36) présentant des dimensions *c* × *d,*
- (E14) chaque image (32) caractéristique est réduite pour donner une image, dite image (33) réduite, présentant des dimensions *m* × *n*, ladite image (33) réduite étant générée en remplaçant chaque sous-image (36) de cette image (32) caractéristique par au moins une valeur, dite valeur représentative de cette sous-image (36), déterminée comme fonction des *c* × *d* pixels de cette sous-image (36),
- une fonction, dite fonction de sélection, est déterminée pour pouvoir sélectionner parmi p valeurs, au moins une valeur, dite valeur élue,
- (E15) à chaque élément (*i,j*)*, i ∈* [1*,*m], *j* ∈ [1,*n*], de cet index, est attribué l'indice du traitement dont résulte l'image (32) caractéristique dont découle l'image (33) réduite qui comprend ladite valeur élue par ladite fonction de sélection appliquée aux *p* pixels (*i,j*) des *p* images (33) réduites.

2. Procédé selon la revendication 1, **caractérisé en ce que**, pour chaque index répertorié dudit répertoire d'index,
- (E5) ladite image associée à cet index répertorié est transmise à un dispositif (56) de lecture et d'analyse de cette image si ledit comparateur (55) a déterminé que la distance entre cet index répertorié et ledit index de référence est inférieure audit seuil prédéterminé,
- (E6) un dispositif (57) de signalement, associé à une interface homme/machine, est activé pour indiquer à un utilisateur la reconnaissance de ladite image (50) recherchée parmi ladite banque (52) d'images si ledit comparateur (55) a déterminé que ladite distance entre cet index répertorié et ledit index de référence est inférieure audit seuil prédéterminé.

3. Procédé selon l'une des revendications 1 ou 2, **caractérisé en ce que** ladite distance entre un index répertorié et ledit index de référence est évaluée par les étapes dans lesquelles :
- ladite distance est initialisée à *m* × *n*,
- pour chaque élément (*i,j*)*, i ∈* [1*,*m], *j* ∈ [1,*n*] dudit index de référence, la valeur de cet élément est comparée à la valeur de l'élément (*i*,*j*) dudit index répertorié et ladite distance est décrémentée de 1 si ces valeurs sont égales.

4. Procédé selon la revendication 3, **caractérisé en ce que** ledit seuil prédéterminé est compris entre 0 et (*m* × *n)* / *p.*

5. Procédé selon l'une des revendications 1 à 4, **caractérisé en ce que** chacun des *p* traitements d'une image (31) normalisée par un opérateur mathématique pour fournir une image (32) caractéristique est adapté pour effectuer un filtrage spatial de l'image (31) normalisée.

6. Procédé selon la revendication 5, **caractérisé en ce que** chaque matrice de convolution est choisie parmi les matrices de Sobel, les matrices de Prewitt, les matrices du Sigma, les matrices de Roberts, les matrices du Laplacien, les matrices du Gradient.

7. Procédé selon l'une des revendications 1 à 6, **caractérisé en ce que** ladite valeur représentative d'une sous-image (36) de dimension *c* × *d* est valeur du pixel de cette sous-image (36) dont la valeur est maximale.

8. Procédé selon l'une des revendications 1 à 7, **caractérisé en ce que** ladite fonction de sélection d'une valeur élue parmi p valeurs est adaptée pour sélectionner la valeur maximale de ces *p* valeurs.

9. Procédé selon l'une des revendications 1 à 8, **caractérisé en ce que** *p* est supérieur à 6, notamment compris entre 6 et 128.

10. Procédé selon l'une des revendications 1 à 9, **caractérisé en ce que** *n* et *m* sont supérieurs à 6, notamment compris entre 6 et 20.

11. Procédé selon l'une des revendications 1 à 10, **caractérisé en ce que** les entiers *c* et *d* sont égaux de telle sorte que les sous-images (36) de chaque image (32) caractéristique sont carrées.

12. Procédé selon l'une des revendications 1 à 11, **caractérisé en ce que** *c* et *d* sont supérieurs à 2, notamment compris entre 2 et 5.

13. Procédé selon l'une des revendications 1 à 12, **caractérisé en ce que** lesdits index répertoriés de ladite banque (52) d'images sont évalués avant l'évaluation dudit index de référence de ladite image (50) recherchée.

14. Procédé selon l'une des revendications 1 à 13, **caractérisé en ce que** ladite banque (52) d'images est un flux d'images (40).

15. Procédé selon l'une des revendications 1 à 14, dans lequel ladite banque (52) d'images comprend une pluralité de séquences vidéos, chaque séquence vidéo comprenant au moins un attribut représentatif de cette séquence, **caractérisé en ce que** la lecture par ledit dispositif de lecture et d'analyse (56) d'une image (40) numérique associée à un index répertorié dont la distance par rapport audit index de référence est inférieure au seuil prédéterminé comprend une étape dans laquelle au moins un attribut de la séquence vidéo comprenant cette image (40) est transmis à une interface homme/machiné.

16. Procédé selon l'une des revendications 1 à 15, **caractérisé en ce que** chaque index est adapté pour être mémorisé sur un support de masse par moins de 128 octets, notamment moins de 64 octets.

17. Procédé selon l'une des revendications 1 à 16, **caractérisé en ce que** ladite image recherchée est une image flash subliminale insérée dans une séquence vidéo et **en ce que** la dite banque d'images est cette séquence vidéo.

## Claims

1. A method of fast searching and recognition of a predetermined digital image (50), called the searched-for image, representing at least one graphic pattern, among a plurality of digital images (40), called the image bank (52), in which:
- (E1) an index, called the reference index, is associated with said searched-for image (50),
- (E2) for each image (40) of said image bank (52), an index, called the listed index, is associated with this image (40) and is sent to an index list (53),
- for each listed index of the said index list (53),
. (E3) a measurement of the similarity, called the distance, between this listed index and said reference index is determined and sent to a comparator (55),
. (E4) said determined distance is compared with a predetermined threshold by said comparator in order to determine whether the image associated with this listed index is similar, according to said comparison threshold, to said searched-for image,
**Characterized in that** each index (listed and reference) is a two-dimensional matrix of dimensions *m* × *n,* where m and n are predetermined integers, generated by the following steps:
- (E12) the digital image (40; 50) associated with this index is sent to a module for resampling this image, adapted to provide a digital image, called the normalized image (31), having dimensions *c.m* × *d.n,* where *c* and *d* are predetermined integers,
- (E13) said normalized image is sent to a module for processing this image, adapted to carry out *p* processes, indexed from 1 to *p*, on the normalized image (31) by *p* predetermined mathematical operators (S1, S2, S3, S4), to provide *p* digital images, called characteristic images (32), *p* being a predetermined integer, each characteristic image (32) being composed of *m* × *n* sub-images (36), each sub-image (36) having the dimensions *c* × *d,*
- (E14) each characteristic image (32) is reduced to provide an image, called the reduced image (33), having the dimensions *m*×*n*, said reduced image (33) being generated by replacing each sub-image (36) of this characteristic image (32) by at least one value, called the representative value of this sub-image (36), determined as a function of the *c*×*d* pixels of this sub-image (36),
- a function called the selection function is determined, to enable at least one value, called the selected value, to be selected from p values,
- (E15) each element (*i,j*)*, i ∈* [1*,*m], *j* ∈ [1,*n*] of this index is given the index of the process which produces the characteristic image (32) from which is obtained the reduced image (33) which comprises said value selected by said selection function applied to the p pixels (*i,j*) of the *p* reduced images (33).

2. The method according to claim 1, **characterized in that**, for each listed index of said index list,
- (E5) said image associated with this listed index is sent to a device (56) for reading and analyzing this image if said comparator (55) has determined that the distance between this listed index and said reference index is below said predetermined threshold,
- (E6) a signaling device (57), associated with a man-machine interface, is activated to alert a user to the recognition of said searched-for image (50) in said image bank (52) if said comparator (55) has determined that said distance between this listed index and said reference index is below said predetermined threshold.

3. The method according to claim 1 or 2, **characterized in that** said distance between a listed index and said reference index is determined by the steps in which:
- said distance is initialized to *m* × *n,*
- for each element (*i*,*j*), *i ∈* [1*,*m], *j* ∈ [1,*n*] of said reference index, the value of this element is compared with the value of the element (*i,j*) of said listed index and said distance is decremented by 1 if these values are equal.

4. The method according to claim 3, **characterized in that** said predetermined threshold is in the range from 0 to (*m* × *n*)/*p.*

5. The method according to any one of claims 1 to 4, **characterized in that** each of the p processes carried out on a normalized image (31) by a mathematical operator to provide a characteristic image (32) is adapted to carry out a spatial filtering of the normalized image (31).

6. The method according to claim 5, **characterized in that** each convolution matrix is chosen from Sobel matrices, Prewitt matrices, Sigma matrices, Roberts matrices, Laplacian matrices, and Gradient matrices.

7. The method according to any one of claims 1 to 6, **characterized in that** said value representing a sub-image (36) of dimension *c*×*d* is the value of the pixel of this sub-image (36) which has the maximum value.

8. The method according to any one of claims 1 to 7, **characterized in that** said function for selecting a selected value among *p* values is adapted to select the maximum value of these *p* values.

9. The method according to any one of claims 1 to 8, **characterized in that** *p* is greater than 6, being for example in the range from 6 to 128.

10. The method according to any one of claims 1 to 9, **characterized in that** *n* and *m* are greater than 6, being for example in the range from 6 to 20.

11. The method according to any one of claims 1 to 10, **characterized in that** the whole numbers c and d are equal, and consequently the sub-images (36) of each characteristic image (32) are squared.

12. The method according to any one of claims 1 to 11, **characterized in that** *c* and *d* are greater than 2, being for example in the range from 2 to 5.

13. The method according to any one of claims 1 to 12, **characterized in that** said listed indexes in said image bank (52) are determined before the determination of said reference index of said searched-for image (50).

14. The method according to any one of claims 1 to 13, **characterized in that** said image bank (52) is a stream of images (40).

15. The method according to any one of claims 1 to 14, in which said image bank (52) comprises a plurality of video sequences, each video sequence comprising at least one attribute representing this sequence, **characterized in that** the reading by said reading and analysis device (56) of a digital image (40) associated with a listed index whose distance from said reference index is below the predetermined threshold comprises a step in which at least one attribute of the video sequence comprising this image (40) is sent to a man-machine interface.

16. The method according to any one of claims 1 to 15, **characterized in that** each index is adapted to be stored in a mass memory unit in less than 128 bytes, for example less than 64 bytes.

17. The method according to any one of claims 1 to 16, **characterized in that** said searched-for image is a subliminal flash image inserted into a video sequence and **in that** said image bank is this video sequence.

## Patentansprüche

1. Verfahren für schnelle Suche und Erkennung eines mindestens ein graphisches Muster repräsentierenden vorbestimmten digitalen Bildes (50), das sogenannte gesuchte Bild, unter einer Mehrzahl digitaler Bilder (40), in der sogenannten Bilderbank (52), bei dem:
- (E1) dem besagten gesuchten Bild (50) ein Index, der sogenannte Bezugsindex, zugeordnet wird,
- (E2) für jedes Bild (40) der besagten Bilderbank (52) ein Index, der sogenannte registrierte Index (40) diesem Bild (40) zugeordnet und an ein Indexverzeichnis (53) übermittelt wird,
- für jeden registrierten Index des besagten Indexverzeichnisses (53)
. für jeden registrierten Index des besagten Indexverzeichnisses (53)(E3) eine Ähnlichkeitsmessung, die sogenannte Entfernung, zwischen diesem registrierten Index und dem besagten Bezugsindex bewertet und an einen Komparator (55) übermittelt wird,
. (E4) die besagte bewertete Entfernung mit einem vom besagten Komparator vorbestimmten Schwellwert verglichen wird, um zu bestimmen, ob das diesem registrierten Index zugeordnete Bild dem besagten gesuchten Bild bis auf den besagten Vergleichsschwellwert ähnlich ist,
**dadurch gekennzeichnet, daß** jeder Index - der registrierte und der Bezugsindex - eine zweidimensionale Matrix mit den Abmessungen *m x n* ist, wobei m und n vorbestimmte ganze Zahlen sind, und die von den nachstehenden Schritten generiert wird:
- (E12) das diesem Index zugeordnete digitale Bild (40; 50) wird an ein Modul zur Neuabtastung dieses Bildes übertragen, das geeignet ist, ein digitales Bild, das sogenannte Normalbild (31), zu liefern, das Abmessungen *c.m x d.n.* aufweist, bei denen *c* und *d* vorbestimmte ganze Zahlen sind.
- (E13) das besagte Normalbild wird an ein Modul zur Verarbeitung dieses Bildes übermittelt, das geeignet ist, *p* Verarbeitungen mit dem Index 1 bis *p* des Normalbildes (31) durch *p* vorbestimmte mathematische Operatoren (S1, S2, S3, S4) durchzuführen, um *p* digitale Bilder zu liefern, sogenannte Strukturbilder (32), wobei *p* eine vorbestimmte ganze Zahl ist, wobei jedes Strukturbild (32) aus *m x n* Teilbildern (36) besteht, wobei jedes Teilbild (36) *c x d* Abmessungen aufweist,
- (E14) jedes Strukturbild (32) wird aufgeschlüsselt und ergibt ein Bild, das sogenannte reduzierte Bild (33), das Abmessungen *m x n* aufweist, wobei das besagte reduzierte Bild (32) generiert wird, indem jedes Teilbild (36) dieses Strukturbildes (32) durch mindestens einen Wert, den sogenannten repräsentativen Wert, dieses Teilbildes (36) ersetzt wird, der als Funktion der *c x d* Bildpunkte dieses Teilbildes (36) bestimmt wird,
- Eine Funktion, die sogenannte Wahlfunktion, wird bestimmt, damit unter *p* Werten mindestens ein Wert, der sogenannte gewählte Wert, gewählt werden kann,
- (E15) jedem Element *(i, j), i* ∈ [*l*, *m*], *j* ∈ [*l*, n] dieses Indexes wird der Index der Verarbeitung zugeordnet, aus der das Strukturbild (32) resultiert, aus dem das reduzierte Bild (33) hervorgeht, das den besagten Wert umfaßt, der von der besagten Wahlfunktion in Anwendung auf die p Bildpunkte (*i*, *j*) der *p* reduzierten Bilder (33) gewählt wird.

2. Verfahren nach Anspruch 1, **dadurch gekennzeichnet, daß** für jeden registrierten Index des besagten Indexverzeichnisses,
- (E5) das besagte diesem registrierten Index zugeordnete Bild an eine Vorrichtung (56) zum Lesen und Auswerten dieses Bildes übermittelt wird, wenn der besagte Komparator (55) bestimmt hat, daß die Entfernung zwischen diesem registrierten Index und dem besagten Bezugsindex geringer als der besagte vorbestimmte Schwellwert ist,
- (E6) eine Meldevorrichtung (57), die einer Mensch-/Maschinen-Schnittstelle zugeordnet ist, aktiviert wird, um einem Benutzer das Erkennen des besagten in der besagten Bilderbank (52) gesuchten Bildes (50) anzugeben, wenn der besagte Komparator (55) bestimmt hat, daß die besagte Entfernung zwischen diesem registrierten Index und dem besagten Bezugsindex geringer als der besagte vorbestimmte Schwellwert ist.

3. Verfahren nach einem beliebigen der Ansprüche 1 oder 2, **dadurch gekennzeichnet, daß** die besagte Entfernung zwischen einem registrierten Index und dem besagten Bezugsindex durch Schritte bewertet wird, bei denen:
- die besagte Entfernung auf *m x n* initialisiert wird,
- für jedes Element (*i, j*), *i* ∈ [*l*, *m*], *j* ∈ [*l*, *n*] des besagten Bezugsindexes der Wert dieses Elements mit dem Wert des Elements (*i, j*) des besagten registrierten Indexes verglichen und die besagte Entfernung von 1 heruntergezählt wird, wenn diese Werte gleich sind.

4. Verfahren nach Anspruch 3, **dadurch gekennzeichnet, daß** der besagte vorbestimmte Schwellwert zwischen 0 und (*m x n*)/*p* liegt.

5. Verfahren nach einem beliebigen der vorstehenden Ansprüche 1 bis 4, **dadurch gekennzeichnet, daß** jede der p Verarbeitungen eines Normbildes (31) durch einen mathematischen Operator, um ein Strukturbild (32) zu liefern, geeignet ist, eine räumliche Filterung des Normbildes (31) durchzuführen.

6. Verfahren nach Anspruch 5, **dadurch gekennzeichnet, daß** jede Konvolutionsmatrix unter Sobel Rastern, Prewitt Rastern, Sigma Rastern, Roberts Rastern, Laplace Rastern, Gradientenrastern gewählt wird.

7. Verfahren nach einem beliebigen der vorstehenden Ansprüche 1 bis 6, **dadurch gekennzeichnet, daß** der besagte repräsentative Wert eines Teilbildes (36) mit der Abmessung *c x d* Wert des Bildpunktes dieses Teilbildes (36) ist, dessen Wert maximal ist.

8. Verfahren nach einem beliebigen der vorstehenden Ansprüche 1 bis 7, **dadurch gekennzeichnet, daß** die besagte Wahlfunktion eines unter *p* Werten gewählten Wertes geeignet ist, den maximalen Wert dieser *p* Werte zu wählen.

9. Verfahren nach einem beliebigen der vorstehenden Ansprüche 1 bis 8, **dadurch gekennzeichnet, daß** *p* größer als 6 ist, insbesondere zwischen 6 und 128 liegt.

10. Verfahren nach einem beliebigen der vorstehenden Ansprüche 1 bis 9, **dadurch gekennzeichnet, daß** *n* und *m* größer als 6 sind, insbesondere zwischen 6 und 20 liegen.

11. Verfahren nach einem beliebigen der vorstehenden Ansprüche 1 bis 10, **dadurch gekennzeichnet, daß** die ganzen Zahlen c und d gleich sind, so daß die Teilbilder (36) jedes Strukturbildes (32) quadratisch sind.

12. Verfahren nach einem beliebigen der vorstehenden Ansprüche 1 bis 11, **dadurch gekennzeichnet, daß** *c* und *d* größer als 2 sind, insbesondere zwischen 2 und 5 liegen.

13. Verfahren nach einem beliebigen der vorstehenden Ansprüche 1 bis 12, **dadurch gekennzeichnet, daß** die besagten registrierten Indexe der besagten Bilderbank (52) vor der Bewertung des besagten Bezugsindexes des besagten gesuchten Bildes (50) bewertet werden.

14. Verfahren nach einem beliebigen der vorstehenden Ansprüche 1 bis 13, **dadurch gekennzeichnet, daß** die besagte Bilderbank (52) ein Strom von Bildern (40) ist.

15. Verfahren nach einem beliebigen der vorstehenden Ansprüche 1 bis 14, bei dem die besagte Bilderbank (52) eine Mehrzahl von Videofolgen umfaßt, wobei jede Videofolge mindestens ein für diese Folge repräsentatives Attribut umfaßt, **dadurch gekennzeichnet, daß** das Lesen durch die besagte Lese- und Auswertungsvorrichtung (56) eines digitalen Bildes (40), das einem registrierten Index zugeordnet ist, dessen Entfernung im Verhältnis zum Bezugsindex geringer als der vorbestimmte Schwellwert ist, einen Schritt umfaßt, bei dem mindestens ein Attribut der dieses Bild (40) enthaltenden Videofolge an eine Mensch-/Maschinen-Schnittstelle übermittelt wird.

16. Verfahren nach einem beliebigen der vorstehenden Ansprüche 1 bis 15, **dadurch gekennzeichnet, daß** jeder Index geeignet ist, auf einem Massenträger mit unter 128 Bytes, insbesondere 64 Bytes, gespeichert zu werden.

17. Verfahren nach einem beliebigen der vorstehenden Ansprüche 1 bis 16, **dadurch gekennzeichnet, daß** das gesuchte Bild ein subliminales Flashbild ist, das in eine Videofolge eingeschoben wurde, und **dadurch**, daß die besagte Bilderbank diese Videofolge ist.
